# EUROPÄISCHE PATENTANMELDUNG

(11) **EP 4 492 669 A1**
(43) Veröffentlichungstag der Anmeldung: **15.01.2025**
(21) Anmeldenummer: 24178516.1
(22) Anmeldetag: 28.05.2024
(51) Int. Cl.: H02M 5/458, H02M 7/00, H02M 7/487

(54) **FREQUENZUMRICHTER ZUR VERSORGUNG EINER DREHFELDMASCHINE ODER EINES TRANSFORMATORS, UND DARAUS GEBILDETE ANORDNUNG**

(30) Priorität: 11.07.2023 LU 504720
(71) Anmelder: WILO SE, 44263 Dortmund (DE)
(72) Erfinder: Sanders, Tilman, 44263 Dortmund (DE); Gebing, Marcel, 44263 Dortmund (DE); Gladen, Marcel, 44263 Dortmund (DE)
(74) Vertreter: Cohausz Hannig Borkowski Wißgott

(57) **Zusammenfassung**

Die Erfindung betrifft einen Frequenzumrichter (2) zur Versorgung einer Drehfeldmaschine (3) oder eines Transformators, umfassend einen Netzstromrichter (4) mit ersten Halbleiterschaltern (T1, T2) zur Umwandlung einer Wechselspannung in eine Gleichspannung, einen Maschinenstromrichter (6) mit steuerbaren zweiten Halbleiterschaltern (T3... T6) zur Umwandlung der Gleichspannung in eine Versorgungsspannung, und einen die Gleichspannung tragenden Spannungszwischenkreis (5) mit einem oberen und einem unteren Zwischenkreiszweig (9a, 9b), die an einem gemeinsamen Mittenpunkt (16) miteinander verbunden sind. Der Maschinenstromrichter (6) besteht nur aus zwei, die zweiten Halbleiterschalter (T3... T6) enthaltenden Halbbrücken (10, 12), um an einem ersten Ausgangsanschluss (14a) eine erste Phase und an einem zweiten Ausgangsanschluss (14b) eine zweite Phase bereitzustellen. An einem dritten Ausgangsanschluss (14c) wird der Mittenpunkt (16) bereitgestellt. Der Netzstromrichter (4) besteht aus einer Anzahl an Halbbrücken (7), die die ersten Halbleiterschalter (T1, T2) enthalten. Die genannten Halbleiterschalter (T1 ...T6) sind in einem einzigen leistungselektronischen Bauelement (15) integriert.

## Beschreibung

Die Erfindung betrifft einen Frequenzumrichter zur Versorgung einer Drehfeldmaschine oder eines Transformators mit einer Versorgungsspannung variabler Frequenz und Amplitude, umfassend einen Netzstromrichter mit ersten Halbleiterschaltern zur Umwandlung einer ein- oder mehrphasigen Wechselspannung eines Versorgungsnetzes in eine Gleichspannung, einen Maschinenstromrichter mit steuerbaren zweiten Halbleiterschaltern zur Umwandlung der Gleichspannung in die Versorgungsspannung, und einen zwischen dem Netzstromrichter und dem Maschinenstromrichter angeordneten, die Gleichspannung tragenden Spannungszwischenkreis, der aus einem oberen und einem unteren Zwischenkreiszweig gebildet ist, die an einem gemeinsamen Mittenpunkt miteinander verbunden sind, wobei der obere Zwischenkreiszweig den Mittenpunkt über zumindest einen oberen Kondensator mit einem ersten Pol des Spannungszwischenkreises verbindet und der untere Zwischenkreiszweig den Mittenpunkt über zumindest einen unteren Kondensator mit einem zweiten Pol des Spannungszwischenkreises verbindet. Des Weiteren betrifft die Erfindung eine Anordnung aus einem solchen Frequenzumrichter und einer Drehfeldmaschine oder einem Transformator, wobei die Drehfeldmaschine oder der Transformator von dem Frequenzumrichter speisbar ist.

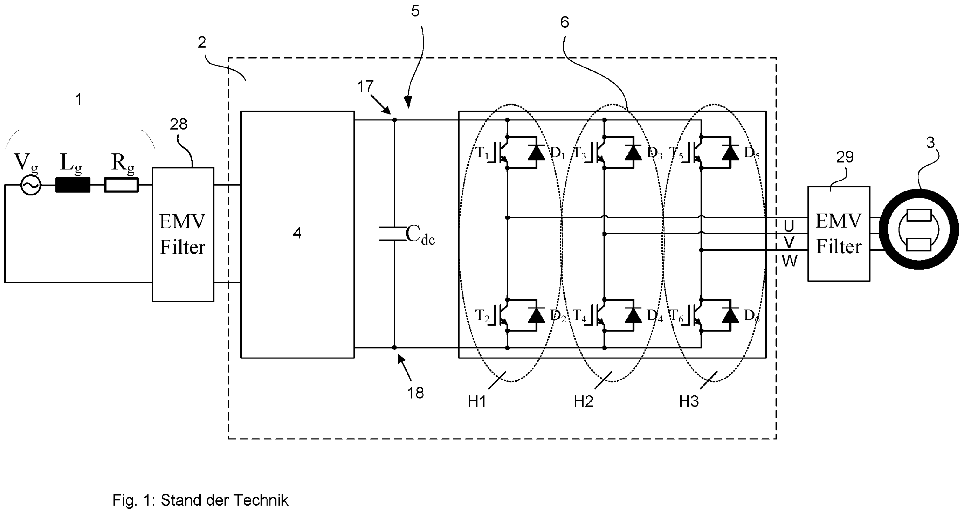

Elektrische Maschinen müssen häufig mit variabler Drehzahl betrieben werden. Beim direkten Betrieb einer Drehfeldmaschine an einem sogenannten "starren" Versorgungsnetz ist die Drehzahl jedoch weitestgehend fest an die Netzfrequenz gekoppelt. Zur Entkopplung werden Frequenzumrichter eingesetzt, die allerdings zusätzliche Kosten und energetische Verluste verursachen. Nach dem aktuellen Stand der Technik wird meist ein Frequenzumrichter eingesetzt, wie er in Figur 1 gezeigt ist, wobei Figur 1 die gesamte Antriebsstrangkonfiguration darstellt. Der Frequenzumrichter 2 wandelt zunächst mit Hilfe eines Netzstromrichters 4 den Wechselstrom aus dem Versorgungsnetz 1 in Gleichstrom um. Als Netzstromrichter 4 wird entweder ein Gleichrichter, z.B. ein Diodengleichrichter in B2-Brückenschaltung, oder eine aktive Leistungsfaktorkorrekturschaltung (PFC) eingesetzt, wobei Letztere einen Gleichrichter in Reihe mit einer nachgeschalteten Spule sowie einen gesteuerten Halbleiterschalter umfasst, der diese Reihenschaltung zeitweise kurzschließt. Darüber hinaus existieren weitere Topologien zur aktiven Leistungsfaktorkorrektur, die dem Fachmann aus der Fachliteratur bekannt sind.

In einem an den Netzstromrichter 4 angeschlossenen Spannungszwischenkreis 5 mit Kondensatoren C_{dc} als Energiespeicher wird die erzeugte Gleichspannung stabilisiert, wodurch Schwankungen der vom Netzstromrichter 4 aus dem Versorgungsnetz 1 in den Spannungszwischenkreis 5 eingespeisten Leistung oder Schwankungen der von einer Last aus dem Spannungszwischenkreis 5 entnommenen Leistung ausgeglichen werden. Die Last ist hier ein Maschinenstromrichter 6, der die Gleichspannung in eine dreiphasige Wechselspannung mit variabler Amplitude und Frequenz umwandelt. Auch kann die Phasenlage der Wechselspannung eingestellt werden. Mit anderen Worten wird Gleichstrom aus dem Spannungszwischenkreis 5 in Drehstrom umgewandelt, mit dem die angeschlossene elektrische Drehfeldmaschine 3 betrieben wird.

Der Maschinenstromrichter 6 besteht dabei gemäß Figur 1 meist aus drei identischen Halbbrücken H1, H2, H3, die alle parallel zum Spannungszwischenkreis geschaltet sind und die jeweils eine Phase der Versorgungsspannung für die Drehfeldmaschine 3 bereitstellen. Jede Halbbrücke besteht aus einem oberen und einem unteren Zweig, in dem jeweils ein steuerbarer, leistungselektronischer Halbleiterschalter angeordnet ist. Somit besteht jede Halbbrücke aus zwei solchen Schaltern, wobei die bereitgestellte Phase zwischen den Halbleiterschaltern liegt. Die erste Halbbrücke H1 besteht aus den Halbleiterschaltern T1 und T2, die zweite Halbbrücke H2 aus den Halbleiterschaltern T3 und T4 und die dritte Halbbrücke H3 aus den Halbleiterschaltern T5 und T6. Jeder Halbleiterschalter T1 ... T6 im Maschinenstromrichter 6 ist außerdem in bekannter Weise mit einer antiparallelen Freilaufdiode D1 ... D6 beschaltet. Über den jeweiligen oberen Zweig, d.h. über die Halbleiterschalter T1, T3 und T5 wird die jeweilige Phase mit einem ersten Pol 17 des Spannungszwischenkreises 5 verbunden, der hier den Pluspol bildet. Entsprechend wird über den jeweiligen unteren Zweig, d.h. über die Halbleiterschalter T2, T4 und T6 die jeweilige Phase mit einem zweiten Pol 18 des Spannungszwischenkreises 5 verbunden, der hier den Minuspol bildet. Die beiden Halbleiterschalter derselben Halbbrücke werden folglich invertiert angesteuert, so dass einer von ihnen im leitenden und der andere im sperrenden Zustand ist.

Durch eine geeignete Ansteuerung der Halbleiterschalter, wie beispielsweise eine Pulsweitenmodulation oder eine Raumzeigermodulation, kann auf diese Weise auf jeder Phase eine Wechselspannung und hierdurch ein dreiphasiges Wechselspannungssystem, d.h. ein Drehstromsystem erzeugt werden.

Die beschriebene Stromrichtertopologie wird als "3-Strang-2-Level" Stromrichter oder "3-Strang-2-Punkt" Stromrichter bezeichnet, wobei sich der Begriff "Strang" auf die erzeugten drei Phasen und der Begriff "Level" auf die Spannungsebenen des Spannungszwischenkreises bezieht.

Die steuerbaren leistungselektronischen Halbleiterschalter sind meist MOSFETs (Metal Oxid Semiconductor Field Effect Transistor) oder IGBTs (Insulated Gate Bipolar Transistor). Sie werden für den Aufbau von Maschinenstromrichtern als ein einziges konzentriertes Bauelement angeboten, in dem die Halbleiterschalter in einem einzigen Gehäuse in Form eines Leistungsmoduls integriert sind. Hergestellt werden diese Bauelemente oder Leistungsmodule beispielsweise von der Firma Infineon Technologies AG, 81726 München, Deutschland, z.B. mit IGBTs unter den Artikelbezeichnungen FS3L25R12W2H3_B11, FS25R12W1T4, FS25R12W1T7P_B11, FS150R17N3E4_B11 oder mit MOSFETs unter der Artikelbezeichnung FS55MR12W1 M1H_B11. Ebenso bieten die Firma "SEMIKRON Elektronik GmbH & Co. KG, Sigmundstr. 200, 90431 Nürnberg, Deutschland" unter den Artikelbezeichnungen SK35GD12T4ET, SK25TMLID12F4TE2 und SKiiP 11AC126V10, und die Firma "Vincotech GmbH, Biberger Straße 93, 82008 Unterhaching, Deutschland" unter den Artikelbezeichnungen 10-F1 126PA025M7-L826F09, V23990-K238-F40, V23990-P708-F40-PM und V23990-P829-F08x Leistungsmodule mit sechs oder mehr integrierten IGBTs an, wobei diese IGBTs teilweise bereits verschaltet sind.

Die steuerbaren Halbleiterschalter im Maschinenstromrichter und Dioden im Netzstromrichter 4 sind teuer und verursachen im Betrieb Verluste (Schaltverluste und Leitverluste) in Form von Wärme, die abgeführt werden muss und die den Wirkungsgrad reduziert.

Aufgabe der Erfindung ist es, den Schaltungs- und Kostenaufwand für einen einphasig gespeisten Frequenzumrichter zu reduzieren und zu optimieren.

Diese Aufgabe wird durch einen Frequenzumrichter mit den Merkmalen des Anspruchs 1 gelöst. Vorteilhafte Weiterbildungen sind in den Unteransprüchen angegeben und werden nachfolgend erläutert.

Erfindungsgemäß wird vorgeschlagen, einen Frequenzumrichter der eingangs genannten Gattung derart weiterzubilden, dass der Maschinenstromrichter nur aus zwei identischen, die zweiten Halbleiterschalter enthaltenden Halbbrücken besteht, um an einem ersten Ausgangsanschluss eine erste Phase der Versorgungsspannung und an einem zweiten Ausgangsanschluss eine zweite Phase der Versorgungsspannung bereitzustellen, wobei der Maschinenstromrichter eingerichtet ist, an einem dritten Ausgangsanschluss den Mittenpunkt des Spannungszwischenkreises bereitzustellen, und der Netzstromrichter aus einer Anzahl an Halbbrücken, insbesondere einer der Anzahl an Phasen des Versorgungsnetzes entsprechenden Anzahl an Halbbrücken, besteht, die identisch zu den Halbbrücken des Maschinenstromrichters aufgebaut sind und die ersten Halbleiterschalter enthalten, und wobei die ersten und zweiten Halbleiterschalter physisch in einem einzigen konzentrierten, leistungselektronischen Bauelement integriert sind.

Der erfindungsgemäße Frequenzumrichter zeichnet sich folglich einerseits dadurch aus, dass der Spannungszwischenkreis geteilt ist, und der Maschinenstromrichter nicht aus drei, sondern aus nur zwei Halbbrücken besteht, so dass wenigstens zwei steuerbare Halbleiterschalter bei dem Maschinenstromrichter eingespart werden. So kann der Maschinenstromrichter mit nur vier statt sechs Halbleiterschaltern aufgebaut werden. Die Wärmeverluste werden dadurch verringert. Allerdings müssen diese dann eine doppelt so hohe Spannungsfestigkeit gegenüber einem Maschinenstromrichter mit sechs Halbleiterschaltern bei gleicher Ausgangsspannung aufweisen. Die Drehstrommaschine oder der Transformator wird folglich nur zweiphasig gespeist, wobei allerdings durch eine geeignete Ansteuerung der Halbleiterschalter an den drei Ausgangsanschlüssen wieder ein Drehstromsystem erzeugt werden kann. Die Topologie des Maschinenstromrichters kann als 4-Schalter-3-Strang-2-Level Topologie bezeichnet werden.

Andererseits wird erfindungsgemäß ein einziges leistungselektronisches Bauelement verwendet, in dem mehr als nur die für den Maschinenstromrichter benötigten zweiten Halbleiterschalter integriert sind, nämlich auch die für den Netzstromrichter benötigten ersten Halbleiterschalter. Derartige Bauelemente sind vergleichsweise preiswert verfügbar und beherbergen die Halbleiterschalter auf engem Raum.

Anders betrachtet, können, obwohl der Maschinenstromrichter nur zwei Halbbrücken aufweist, in dem leistungselektronischen Bauelement wenigstens sechs Halbleiterschalter für mindestens drei Halbbrücken integriert sein. Von diesen wenigstens sechs Halbleiterschaltern in dem leistungselektronischen Bauelement werden zumindest vier Halbleiterschalter für die zwei Halbbrücken des Maschinenstromrichters verwendet, während die übrigen Halbleiterschalter für die Halbbrücke oder Halbbrücken im Netzstromrichter verwendet werden.

Da alle Halbbrücken identisch sind, besitzt der Netzstromrichter ebenfalls steuerbare Halbleiterschalter, mittels denen nicht nur eine Gleichrichtung aus der Wechselspannung des Versorgungsnetzes realisiert wird, sondern gleichzeitig eine Leistungsfaktorregelung (PFC) möglich ist.

Mit dem leistungselektronischen Bauelement wird der gemeinsame Bauraum für den Maschinenstromrichter und den Netzstromrichter reduziert. Gleichzeitig wird der Schaltungs- und Kostenaufwand für einen Frequenzumrichter mit einphasigem Netzstromrichter deutlich reduziert.

Zudem ist der so aufgebaute Frequenzumrichter bei entsprechender Ansteuerung auch in der Lage, Leistung aus der Drehfeldmaschine oder dem Transformator in das Versorgungsnetz zurückzuspeisen, was im Falle der Drehfeldmaschine für einige Anwendungen von drehzahlvariablen Antrieben vorteilhaft ist.

Des Weiteren kann mit den steuerbaren Halbleiterschaltern des Netzstromrichters auch Blindleistung mit dem Versorgungsnetz ausgetauscht werden, die von einer übergeordneten Einheit zur Steuerung der ersten Halbleiterschalter weitgehend unabhängig vom sonstigen Betrieb des Frequenzumrichters, und somit frei vorgegeben werden kann, wodurch ein Beitrag zur Stabilisierung des Versorgungsnetzes geleistet und/ oder die Blindleistung von anderen Verbrauchern kompensiert werden kann.

Vorzugsweise sind in dem leistungselektronischen Bauelement genau drei, vier oder fünf identische, voneinander unabhängige Halbbrücken integriert, wobei innerhalb des Bauelements die ersten Halbleiterschalter zu der oder den für den Netzstromrichter verwendeten Halbbrücke(n) und die zweiten Halbleiterschalter zu den für den Maschinenstromrichter verwendeten Halbbrücken verschaltet sind. Damit wird der Schaltungsaufwand weiter reduziert. Weist das leistungselektronische Bauelement drei voneinander unabhängige Halbbrücken auf, können zwei davon für den Maschinenstromrichter und die übrige dritte Halbbrücke zur Bildung eines einphasigen Netzstromrichters verwendet werden. Weist das leistungselektronische Bauelement alternativ fünf voneinander unabhängige Halbbrücken auf, können zwei davon für den Maschinenstromrichter und die übrigen drei Halbbrücken zur Bildung eines dreiphasigen Netzstromrichters verwendet werden. Weiter alternativ können bei dem leistungselektronischen Bauelement vier voneinander unabhängige Halbbrücken integriert sein, von denen zwei für den Maschinenstromrichter und die übrigen zwei Halbbrücken zur Bildung eines dreiphasigen Netzstromrichters genutzt werden, der allerdings an nur zwei Phasen des Versorgungsnetzes betrieben wird. Bei dieser Ausführungsvariante wird folglich die 4-Schalter-3-Strang-2-Level Topologie sowohl für den Maschinenstromrichter als auch für den Netzstromrichter genutzt.

Als leistungselektronisches Bauelement kann eines der in der Beschreibungseinleitung genannten Leistungsmodule der Firmen Infineon, SEMIKRON oder Vincotech verwendet werden.

Es sei angemerkt, dass das leistungselektronische Bauelement zusätzlich zu den Halbbrücken einen oder weitere Bauelemente integriert haben kann, beispielsweise einen weitere steuerbaren Halbleiterschalter, der beispielsweise als sogenannter "Brems-Chopper" verwendet werden kann, um einen Widerstand parallel zu den Kondensatoren C_{dc} des Zwischenkreises zu schließen und über diesen Energie aus dem Spannungszwischenkreis in Wärme umzuwandeln. Ein Leistungsmodul mit drei Halbbrücken und einem zusätzlichen steuerbaren Halbleiterschalter, das als leistungselektronische Bauelement verwendet werden kann, ist beispielsweise unter der Bezeichnung "Sevenpack" bei der Firma Vincotech verfügbar, z.B. unter der Artikelnummer 10-FZ127PA008SC-L156E08.

Wir bereits angesprochen, kann der Netzstromrichter in einer ersten Ausführungsvariante aus einer einzigen Halbbrücke bestehen und somit einphasig sein, um an einem einphasigen Versorgungsnetz betrieben zu werden. Diese Halbbrücke des Netzstromrichters kann aus einem oberen und einem unteren Netzstromrichterzweig gebildet sein oder bestehen und einen ersten Eingangsknotenpunkt aufweisen, der den oberen und den unteren Netzstromrichterzweig miteinander verbindet und zur Verbindung mit einem ersten Leiter des einphasigen Versorgungsnetzes vorgesehen ist, wobei der obere Netzstromrichterzweig den Eingangsknotenpunkt über zumindest einen oberen steuerbaren Halbleiterschalter der ersten Halbleiterschalter mit dem ersten Pol der Gleichspannung verbindet und der untere Netzstromrichterzweig den Eingangsknotenpunkt über zumindest einen unteren steuerbaren Halbleiterschalter der ersten Halbleiterschalter mit dem zweiten Pol der Gleichspannung verbindet. Diese Anordnung ermöglicht es, mit einer einzigen Halbbrücke sowohl die Energie der positiven Halbwelle der Wechselspannung als auch die Energie der negativen Halbwelle der Wechselspannung in den Zwischenkreis einzuspeisen. So wird zur Einspeisung der Energie der positiven Halbwelle der obere Halbleiterschalter in den leitenden Zustand geschaltet, und zur Einspeisung der Energie der negativen Halbwelle der untere Halbleiterschalter.

In einer zweiten Ausführungsvariante kann der Netzstromrichter aus drei Halbbrücken bestehen und somit dreiphasig sein, um an einem dreiphasigen Versorgungsnetz betrieben zu werden. In einer dritten Ausführungsvariante kann der Netzstromrichter aus zwei Halbbrücken bestehen und somit zweiphasig sein, allerdings an einem dreiphasigen Versorgungsnetz betrieben werden. Jede dieser Halbbrücken der zweiten und dritten Ausführungsvariante kann aus einem oberen und einem unteren Netzstromrichterzweig gebildet sein oder bestehen und einen Eingangsknotenpunkt aufweisen, der den oberen und den unteren Netzstromrichterzweig der jeweiligen Halbbrücke miteinander verbindet und zur Verbindung mit jeweils einer der Phasen dem dreiphasigen Versorgungsnetzes vorgesehen ist, wobei der obere Netzstromrichterzweig einer jeden Halbbrücke den jeweiligen Eingangsknotenpunkt über zumindest einen oberen steuerbaren Halbleiterschalter der ersten Halbleiterschalter mit dem ersten Pol der Gleichspannung verbindet und der untere Netzstromrichterzweig einer jeden Halbbrücke den jeweiligen Eingangsknotenpunkt über zumindest einen unteren steuerbaren Halbleiterschalter der ersten Halbleiterschalter mit dem zweiten Pol der Gleichspannung verbindet. Diese Anordnung ermöglicht den Betrieb des erfindungsgemäßen Frequenzumrichters an dem dreiphasigen Versorgungsnetz.

In der dritten Ausführungsvariante besteht der Netzstromrichter aus einer ersten Halbbrücke mit einem ersten Eingangsknotenpunkt und einer zweiten Halbbrücke mit einem zweiten Eingangsknotenpunkt, wobei der erste Eingangsknotenpunkt zur Verbindung mit einer ersten Phase des dreiphasigen Versorgungsnetzes und der zweite Eingangsknotenpunkt zur Verbindung mit einer zweiten Phase des dreiphasigen Versorgungsnetzes vorgesehen ist. Der Frequenzumrichter ist dann eingerichtet, einen dritten Eingangsknotenpunkt bereitzustellen, der mit dem Mittenpunkt des Spannungszwischenkreises verbunden ist und der zur Verbindung mit einer dritten Phase des dreiphasigen Versorgungsnetzes vorgesehen ist. Auf diese Weise wird der Netzstromrichter in der dritten Ausführungsvariante zweiphasig gespeist, jedoch an dem dreiphasigen Versorgungsnetz betrieben.

Im Falle des Betriebs des erfindungsgemäßen Frequenzumrichters an dem einphasigen Versorgungsnetz kann der Mittenpunkt des Spannungszwischenkreises einen zweiten Eingangsknotenpunkt bilden und zur Verbindung mit dem zweiten Leiter des einphasigen Versorgungsnetzes vorgesehen sein.

Vorzugsweise handelt es sich bei dem zweiten Leiter um den Nullleiter des Versorgungsnetzes, so dass der Mittenpunkt als Nullpunkt oder Masse betrachtet werden kann, bezogen auf den der erste Pol ein positives Potenzial besitzen kann und somit den Pluspol der Gleichspannung bildet und der zweite Pol ein negatives Potenzial besitzen kann und somit den Minuspol der Gleichspannung bildet. Bei dem ersten Leiter handelt es sich dann folgemäßig um die Phase des einphasigen Versorgungsnetzes, die die Halbbrücke speist. Es ist aber ebenso möglich und technisch gleichwertig, den Nullleiter des Versorgungsnetzes als ersten Leiter und die Phase des Versorgungsnetzes als zweiten Leiter zu verwenden, so dass die Phase an den Mittenpunkt des Spannungszwischenkreises als zweiten Eingangsknotenpunkt und der Nullleiter an den ersten Eingangsknotenpunkt angeschlossen wird.

Jede der Halbbrücken des Maschinenstromrichters kann aus einem oberen und einem unteren Maschinenstromrichterzweig gebildet sein oder bestehen, wobei der obere und der untere Maschinenstromrichterzweig einer ersten Halbbrücke der beiden Halbbrücken an einem gemeinsamen ersten Ausgangsknotenpunkt miteinander und mit dem ersten Ausgangsanschluss verbunden sind, und der obere und der untere Maschinenstromrichterzweig einer zweiten Halbbrücke der beiden Halbbrücken an einem gemeinsamen zweiten Ausgangsknotenpunkt miteinander und mit dem zweiten Ausgangsanschluss verbunden sind, wobei der obere Maschinenstromrichterzweig der ersten Halbbrücke und der obere Maschinenstromrichterzweig der zweiten Halbbrücke den jeweiligen Ausgangsknotenpunkt über zumindest einen oberen steuerbaren Halbleiterschalter der zweiten Halbleiterschalter mit dem ersten Pol der Gleichspannung verbindet und der untere Maschinenstromrichterzweig der ersten Halbbrücke und der untere Maschinenstromrichterzweig der zweiten Halbbrücke den jeweiligen Ausgangsknotenpunkt über zumindest einen unteren steuerbaren Halbleiterschalter der zweiten Halbleiterschalter mit dem zweiten Pol der Gleichspannung verbindet.

Gemäß einer Weiterbildung können die Halbbrücken in jedem Zweig zwei in Reihe liegende, steuerbare Halbleiterschalter umfassen, zwischen denen jeweils ein Anschlusspunkt liegt, von dem aus jeweils eine Brückenleitung mit einer in Richtung des positiveren Potenzials gerichteten Diode mit dem Mittenpunkt verbunden ist. Diese Anordnung ermöglicht es, den ersten und zweiten Ausgangsanschluss des Maschinenstromrichters mit dem Mittenpunkt zu verbinden, d.h. den Nullpunkt auf die erste oder zweite Phase der die Drehfeldmaschine oder den Transformators speisenden Versorgungsspannung zu schalten, so dass drei unterschiedliche Potenziale auf die einzelnen Ausgangsanschlüsse des Maschinenstromrichters geschaltet werden können, nämlich das Potenzial des ersten Pols (Pluspol), das Potenzial des zweiten Pols (Minuspol) und das Potenzial des Mittenpunktes (Nullpunkt bzw. Masse).

Die Erfindung betrifft des Weiteren eine Anordnung aus einem Frequenzumrichter der vorstehend beschriebenen Art und einer Drehfeldmaschine oder einem Transformator, wobei die Drehfeldmaschine oder der Transformator von dem Frequenzumrichter im Betrieb gespeist wird, und über eine erste Zuleitung mit dem ersten Ausgangsanschluss, über eine zweite Zuleitung mit dem zweiten Ausgangsanschluss und über eine dritte Zuleitung mit dem dritten Ausgangsanschluss verbunden ist.

Geeigneterweise kann die Anordnung einen Maschinenfilter umfassen, das zwischen dem Frequenzumrichter und der Drehfeldmaschine oder dem Transformator angeordnet ist, und das aus zwei Induktivitäten und zwei oder drei Kapazitäten besteht, wobei eine der Induktivitäten in der ersten Zuleitung und die andere Induktivität in der zweiten Zuleitung angeordnet ist, und eine der Kapazitäten die erste Zuleitung und eine zweite der Kapazitäten die zweite Zuleitung jeweils zwischen der Drehfeldmaschine oder dem Transformator und der jeweiligen Induktivität mit einem, und zwar demselben Potenzial des Spannungszwischenkreises verbindet. Da die Drehfeldmaschine bzw. der Transformator nur zweiphasig gespeist wird, wird gegenüber dem Stand der Technik ein induktives Filterelement eingespart, nämlich dasjenige in der dritten Zuleitung.

Bei dem Potenzial des Spannungszwischenkreises kann es sich um den Mittenpunkt (Neutralpunkt), den ersten Pol (Pluspol) oder den zweiten Pol (Minuspol) handeln. Wird als Potenzial der erste oder zweite Pol verwendet, kann eine dritte Kapazität im Maschinenfilter die dritte Zuleitung mit diesem Potenzial verbinden. Von Vorteil ist es jedoch, wenn als Potenzial der Mittenpunkt verwendet wird. Da die dritte Zuleitung bereits mit dem Mittenpunkt verbunden ist, kann in diesem Fall die dritte Kapazität entfallen. Es bietet sich deshalb an, das Maschinenfilter aus zwei Induktivitäten und nur zwei Kapazitäten bestehend auszuführen, wobei die Kapazitäten jeweils eine der ersten und zweiten Zuleitung mit der dritten Zuleitung verbinden.

Die Anordnung kann bei der Verwendung eines Frequenzumrichters mit einem zweiphasigen Netzstromrichter gemäß der dritten Ausführungsvariante mit genau zwei Halbbrücken zusätzlich oder alternativ zum Maschinenfilter einen Netzfilter aufweisen, der zwischen dem Versorgungsnetz und dem Frequenzumrichter liegt. Der Netzfilter kann analog zum Maschinenfilter aufgebaut sein, d.h. aus zwei Induktivitäten und zwei oder drei Kapazitäten bestehen, wobei eine der Induktivitäten den ersten Eingangsknotenpunkt mit der ersten Phase und die andere Induktivität den zweiten Eingangsknotenpunkt mit der zweiten Phase des Versorgungsnetzes verbindet, und eine der Kapazitäten den ersten Eingangsknotenpunkt und eine zweite der Kapazitäten den zweiten Eingangsknotenpunkt mit einem, und zwar demselben Potenzial des Spannungszwischenkreises verbindet. Da der Netzstromrichter nur zweiphasig gespeist wird, wird auch in diesem Fall gegenüber dem Stand der Technik ein induktives Filterelement eingespart, nämlich dasjenige, das die dritte Phase des Versorgungsnetzes mit dem Netzumrichter verbinden würde.

Auch beim Netzfilter kann das genannte Potenzial des Spannungszwischenkreises der Mittenpunkt (Neutralpunkt), den ersten Pol (Pluspol) oder der zweite Pol (Minuspol) sein. Wird hier als Potenzial der erste oder zweite Pol verwendet, kann eine dritte Kapazität im Netzfilter den dritten Eingangsknotenpunkt mit diesem Potenzial verbinden. Von Vorteil ist es jedoch auch hier, wenn als Potenzial der Mittenpunkt verwendet wird, weil der dritte Eingangsknotenpunkt bereits mit dem Mittenpunkt verbunden ist und dadurch die dritte Kapazität entfallen kann. Es bietet sich deshalb an, das Netzfilter aus zwei Induktivitäten und nur zwei Kapazitäten bestehend auszuführen, wobei die Kapazitäten den ersten und den zweiten Eingangsknotenpunkt jeweils mit dem dritten Eingangsknotenpunkt verbinden.

Es sei angemerkt, dass jede der genannten Kapazitäten durch einen oder mehrere Kondensatoren gebildet sein kann. Entsprechend kann jede der genannten Induktivitäten durch eine oder mehrere Spulen gebildet sein.

Eine bevorzugte Anwendung der Anordnung besteht darin, dass die Drehfeldmaschine ein Pumpenmotor einer Kreiselpumpe ist, d.h. eine Kreiselpumpe antreibt.

Weitere Merkmale, Vorteile und Eigenschaften der Erfindung werden nachfolgend anhand von Ausführungsbeispielen und den beigefügten Figuren näher erläutert. In den Figuren bezeichnen identisch Bezugsziffern oder -zeichen identische oder zumindest wirkungsgleiche äquivalente Komponenten, Teile, Fläche oder Richtungen.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Merkmale einer Ausführungsvariante der Erfindung können auch bei einer anderen Ausführungsvariante vorhanden sein, sofern dies nicht technisch ausgeschlossen ist. Zudem können beschriebene Verfahrensmerkmale bei einer der hier beschriebenen Vorrichtungen und beschriebene Vorrichtungsmerkmale bei einem hier beschriebenen Verfahren vorhanden sein.

Es zeigen:
- Figur 1:: Prinzipielles Ersatzschaltbild eines Frequenzumrichters nach dem Stand der Technik am einphasigen elektrischen Versorgungsnetz zum Antrieb einer elektrischen Drehfeldmaschine
- Figur 2:: Ersatzschaltbild eines erfindungsgemäßen Frequenzumrichters mit einem Maschinenstromrichter in 4-Schalter-3-Strang-2-Level Topologie mit aktivem Netzstromrichter am einphasigen Versorgungsnetz und einem ersten leistungselektronischen Bauelement mit Halbleiterschaltern des Netz- und Maschinenstromrichters
- Figur 2a:: Ersatzschaltbild eines erfindungsgemäßen Frequenzumrichters mit einem Maschinenstromrichter in 4-Schalter-3-Strang-2-Level Topologie mit aktivem Netzstromrichter am dreiphasigen Versorgungsnetz und einem zweiten leistungselektronischen Bauelement mit Halbleiterschaltern des Netz- und Maschinenstromrichters
- Figur 2b:: Ersatzschaltbild eines erfindungsgemäßen Frequenzumrichters mit einem Maschinenstromrichter in 4-Schalter-3-Strang-2-Level Topologie mit aktivem Netzstromrichter in 4-Schalter-3-Strang-2-Level Topologie am dreiphasigen Versorgungsnetz und einem dritten leistungselektronischen Bauelement mit Halbleiterschaltern des Netz- und Maschinenstromrichters
- Figur 3a:: Ersatzschaltbild eines weiteren leistungselektronischen Bauelements mit Halbleiterschaltern des Netz- und Maschinenstromrichters
- Figur 3b:: Ersatzschaltbild eines weiteren leistungselektronischen Bauelements mit Halbleiterschaltern des Netz- und Maschinenstromrichters
- Figur 4:: Ersatzschaltbild eines erfindungsgemäßen Frequenzumrichters mit einem Maschinenstromrichter in 8-Schalter-3-Strang-3-Level Topologie mit aktivem Netzstromrichter am einphasigen Versorgungsnetz.
- Figur 5:: Ersatzschaltbild des dem Maschinenstromrichter nachgeordneten Maschinenfilters (EMV-Filter)

Figur 1 zeigt die Anordnung eines konventionellen Frequenzumrichters 2 an einem einphasigen Versorgungsnetz 1 mit vorgeschaltetem Netzfilter 28 (EMV-Filter) zur Reduzierung der vom Frequenzumrichter 2 erzeugten Oberschwingungen. Der Frequenzumrichter 2 stellt hier eine dreiphasige Versorgungsspannung einer Drehfeldmaschine 3 bereit, beispielsweise einem permanentmagnetischen Synchronmotor. Dieser treibt beispielsweise eine hier nicht dargestellte Kreiselpumpe an und bildet somit einen Pumpenmotor einer Kreiselpumpe. Zwischen dem Frequenzumrichter 2 und der Drehfeldmaschine 3 ist ein Maschinenfilter 29 (EMV-Filter) geschaltet. Figur 1 und die Topologie des Frequenzumrichters 2 mit seiner "3-Strang-2-Level" Architektur wurden bereits in der Beschreibungseinleitung erläutert, so dass auf die dortigen Ausführungen verwiesen wird.

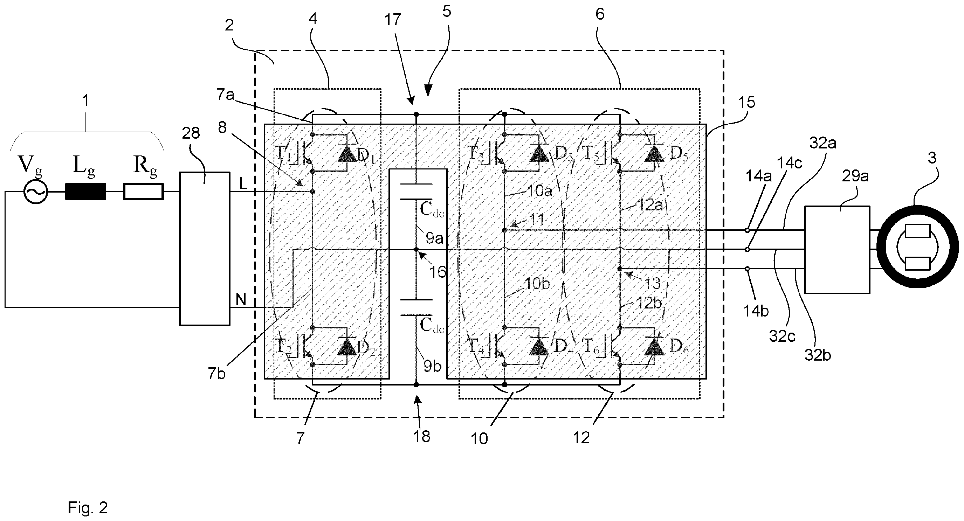

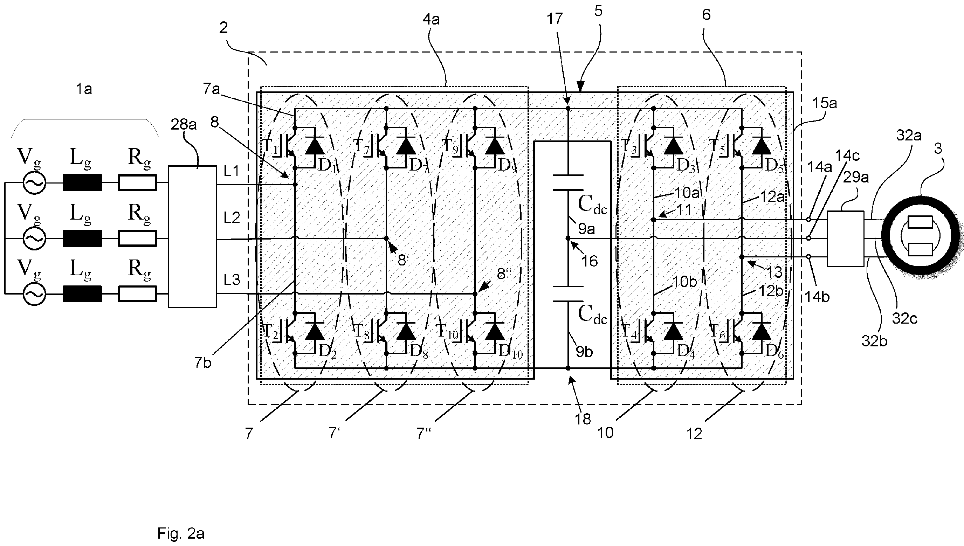

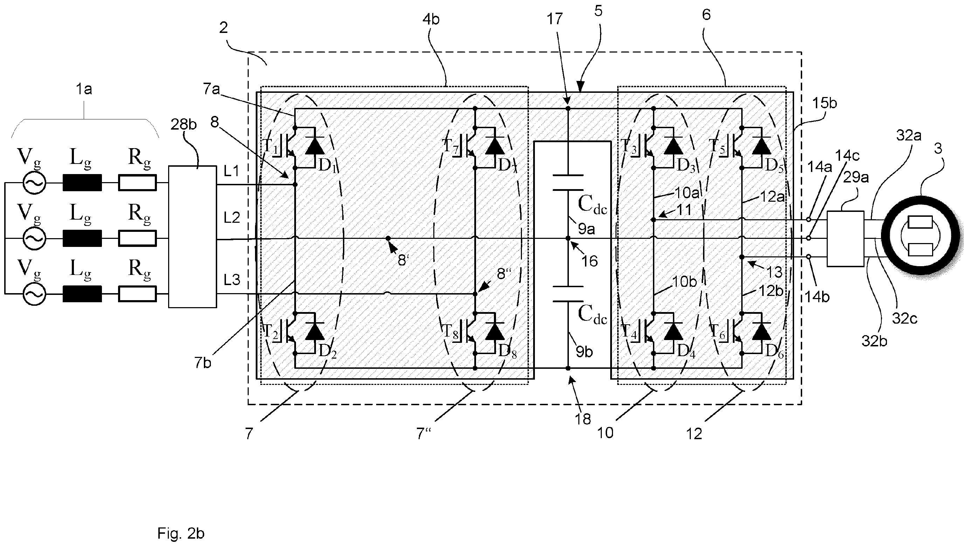

Figur 2 zeigt ein Beispiel eines erfindungsgemäßen Frequenzumrichters 2. Er unterscheidet sich einerseits von dem konventionellen Frequenzumrichter 2 in Figur 1 darin, dass der Maschinenstromrichter 6 nur aus vier steuerbaren Halbleiterschaltern T3, T4, T5, T6 in zwei identischen Halbbrücken 10, 12 aufgebaut ist. Die Halbleiterschaltern T3, T4, T5, T6 sind aus IGBTs gebildet und jeweils mit einer antiparallelen Freilaufdiode D3, D4, D5, D6 zwischen Emitter und Kollektor beschaltet. Mit den Halbleiterschaltern T3, T4, T5, T6 wird an einem ersten Ausgangsanschluss 14a des Frequenzumrichters 2 eine erste Phase der Versorgungsspannung und an einem zweiten Ausgangsanschluss 14b eine zweite Phase der Versorgungsspannung für die Drehfeldmaschine 3 bereitgestellt. Ein dritter Ausgangsanschluss 14c des Frequenzumrichters 2 ist mit einem Mittenpunkt 16 eines zweigeteilten Spannungszwischenkreises 5 verbunden, der hier außerdem an dem Nullleiter N des Versorgungsnetzes 1 angeschlossen ist. Die Drehfeldmaschine 3 ist über eine erste Zuleitung 32a mit dem ersten Ausgangsanschluss 14a, über eine zweite Zuleitung 32b mit dem zweiten Ausgangsanschluss 14b und über eine dritte Zuleitung 32c mit dem dritten Ausgangsanschluss 14c verbunden. Somit wird die Drehfeldmaschine 3 nur über die erste und die zweite Zuleitungen 32a, 32b, d.h. zweiphasig gespeist, gleichwohl können die Halbleiterschaltern T3, T4, T5, T6 so angesteuert werden, das an den drei Ausgangsanschlüssen 14a, 14b, 14c ein Drehstromsystem, d.h. eine dreiphasige Versorgungsspannung vorliegt.

Hierzu ist jede der Halbbrücken 10, 12 des Maschinenstromrichters 6 aus einem oberen Maschinenstromrichterzweig 10a, 12a und einem unteren Maschinenstromrichterzweig 10b, 12b gebildet, wobei der obere Maschinenstromrichterzweig 10a und der untere Maschinenstromrichterzweig 10b der ersten Halbbrücke (10) an einem gemeinsamen ersten Ausgangsknotenpunkt 11 miteinander und mit dem ersten Ausgangsanschluss 14a verbunden sind, und der obere Maschinenstromrichterzweig 12a und der untere Maschinenstromrichterzweig 12b der zweiten Halbbrücke 12 an einem gemeinsamen zweiten Ausgangsknotenpunkt 13 miteinander und mit dem zweiten Ausgangsanschluss 14b verbunden sind. Der jeweilige obere Maschinenstromrichterzweig 10a, 12a der ersten und zweiten Halbbrücke 10, 12 verbindet den jeweiligen Ausgangsknotenpunkt 11, 13 über zumindest einen oberen steuerbaren Halbleiterschalter T3, T5 mit dem Pluspol 17 der Gleichspannung des Spannungszwischenkreises 5, und der jeweilige untere Maschinenstromrichterzweig 10b, 12b der ersten und zweiten Halbbrücke 10, 12 verbindet den jeweiligen Ausgangsknotenpunkt 11, 13 über zumindest einen unteren steuerbaren Halbleiterschalter T4, T6 mit dem Minuspol 18 der Gleichspannung des Spannungszwischenkreises 5. Durch eine entsprechende Ansteuerung der Halbleiterschalter T3, T4, T5, T6 kann somit wahlweise der Pluspol 17 oder der Minuspol 18, d.h. zwei verschiedenen Spannungsebenen an den entsprechenden Ausgangsknotenpunkt 11, 13 bzw. den ersten oder zweiten Ausgangsanschluss 14a, 14b geschaltet werden, indem der entsprechende Halbleiterschalter T3, T4, T5, T6 in den leitenden Zustand versetzt wird. Dabei werden die Halbleiterschalter T3, T4, T5, T6 derselben Halbbrücke 10, 12 in bekannter Weise invertiert angesteuert, so dass nur jeweils einer im leitenden, der andere im sperrenden Zustand ist. Der Frequenzumrichters 2 besitzt somit einen Aufbau der, als 4-Schalter-3-Strang-2-Level Topologie bezeichnet werden kann.

Ein weiterer Unterschied zu dem konventionellen Frequenzumrichter 2 in Figur 1 besteht darin, dass der Spannungszwischenkreis 5 zweigeteilt ist, also einen Mittelpunktabgriff am Mittenpunkt 16 besitzt. Er besteht aus einem oberen Zwischenkreiszweig 9a und einem unteren Zwischenkreiszweig 9b, die an dem gemeinsamen Mittenpunkt 16 miteinander verbunden sind. Gleichzeitig ist der Mittenpunkt 16 mit dem Nullleiter N des Versorgungsnetzes 1 verbunden, so dass dieser auf einem definierten Potenzial, und zwar dem Nullpunkt liegt, der die Masse der Gleichspannung des Spannungszwischenkreises bildet. Der obere Zwischenkreiszweig 9a verbindet den Mittenpunkt 16 über zumindest einen oberen Kondensator C_{dc} mit dem Pluspol 17 des Spannungszwischenkreises 5, und der untere Zwischenkreiszweig 9b verbindet den Mittenpunkt 16 über zumindest einen unteren Kondensator C_{dc} mit dem Minuspol 18 des Spannungszwischenkreises 5. In der Praxis können mehrere Kondensatoren im oberen und/ oder unteren Zwischenkreiszweig 9a, 9b angeordnet sein. Der Minuspol 18 des Spannungszwischenkreises 5 liegt hier folglich nicht wie üblich auf Masse, sondern besitzt gegenüber dem Mittenpunkt 16 ein negatives Potenzial, das aufgrund der Symmetrie des Spannungszwischenkreises betraglich dem Potenzial des Pluspols entspricht. Somit liegt am oberen und unteren Zwischenkreiskondensator C_{dc} jeweils die halbe Zwischenkreisspannung an.

Ein dritter Unterschied zu dem konventionellen Frequenzumrichter 2 in Figur 1 besteht darin, dass für den Aufbau des Maschinenstromrichters 6 ein leistungselektronisches Bauelement 15 verwendet wird, in dem mehr als die für den Maschinenstromrichter 6 notwendigen vier Halbleiterschalter T3, T4, T5, T6 bzw. zwei Halbbrücken 10, 12 integriert sind, hier nämlich drei identische, voneinander unabhängige Halbbrücken 7, 10, 12, bzw. sechs Halbleiterschalter T1, T2, T3, T4, T5, T6. Anders betrachtet, kann für den Maschinenstromrichter 6 dasselbe leistungselektronische Bauelement 15 wie bei dem konventionellen Frequenzumrichter 2 nach Figur 1 eingesetzt werden, jedoch werden von diesem Bauelement 15 nur zwei Halbbrücken 10, 12 verwendet.

Dies führt zu dem Vorteil und vierten Unterschied des erfindungsgemäßen Frequenzumrichters 2 gegenüber demjenigen in Figur 1, wonach die verbleibende dritte Halbbrücke 7 des eingesetzten leistungselektronischen Bauelements 15 verwendet wird, um den Netzstromrichter 4 zu realisieren. Dies ist in Figur 2 durch den schraffierten Bereich innerhalb des das Bauelement 15 darstellenden Rahmens veranschaulicht, der den Maschinenstromrichter 6 und den Netzstromrichter 4 grafisch umschließt. Somit sind die steuerbaren Halbleiterschalter T1, T2, T3, T4, T5, T6 sowohl des Maschinenstromrichters 6 als auch des Netzstromrichters 4 physisch in dem einzigen konzentrierten, leistungselektronischen Bauelement 15 integriert.

Das Bauelement 15 wird häufig auch als Integrated Power Module (IPM) bezeichnet und besitzt ein monolithisches Gehäuse. Die dem Netzstromrichter 4 zugeordneten steuerbaren Halbleiterschalter T1, T2 werden im Rahmen der vorliegenden Beschreibung als erste Halbleiterschalter, die dem Maschinenstromrichter 6 zugeordneten steuerbaren Halbleiterschalter T3, T4, T5, T6 als zweite Halbleiterschalter bezeichnet. Jeder dieser steuerbaren Halbleiterschalter ist in bekannter Weise mit einer antiparallelen Freilaufdiode D1 ... D6 beschaltet.

In dem leistungselektronischen Bauelement 15 sind also die ersten Halbleiterschalter T1, T2 zu der Halbbrücke 7 des Netzstromrichters 4 und die zweiten Halbleiterschalter T3, T4, T5, T6 zu der ersten und zweiten Halbbrücke 10, 12 des Maschinenstromrichters 6 verschaltet. Da alle Halbbrücken 7, 10, 12 im leistungselektronischen Bauelement 15 identisch sind, ist die Halbbrücke 7 des Netzstromrichters 4 identisch zu den Halbbrücken 10, 12 des Maschinenstromrichters 6. Wie Figur 2 außerdem zeigt, besteht der Netzstromrichter 4 nur aus dieser einzigen Halbbrücke 7, was einen weiteren Unterschied des erfindungsgemäßen Frequenzumrichters 2 gegenüber dem Stand der Technik darstellt, gemäß dem im einphasigen Fall üblicherweise ein Diodengleichrichter mit zwei Halbbrücken als Netzstromrichter verwendet wird.

Im Detail betrachtet, ist die Halbbrücke 7 des Netzstromrichters 4 aus einem oberen und einem unteren Netzstromrichterzweig 7a, 7b gebildet, die an einem gemeinsamen ersten Eingangsknotenpunkt 8 miteinander und mit der Phase L des Versorgungsnetzes 1 verbunden sind. Es sei angemerkt, dass der Mittenpunkt 16 als zweiter Eingangsknotenpunkt verstanden werden kann, da an ihm der Nullleiter N des Versorgungsnetzes 1 angeschlossen ist. Der obere Netzstromrichterzweig 7a verbindet den ersten Eingangsknotenpunkt 8 über zumindest einen oberen steuerbaren Halbleiterschalter T1 der ersten Halbleiterschalter T1, T2 mit dem Pluspol 17 der Gleichspannung bzw. des Spannungszwischenkreises 5, und der untere Netzstromrichterzweig 7b verbindet den ersten Eingangsknotenpunkt 8 über zumindest einen unteren steuerbaren Halbleiterschalter T2 der ersten Halbleiterschalter T1, T2 mit dem Minuspol 18 der Gleichspannung bzw. des Spannungszwischenkreises 5.

Wie Figur 2 erkennen lässt, sind von den sechs Halbleiterschaltern T1 ... T6 jeweils zwei Halbleiterschalter [T1, T2], [T3, T4], [T5, T6] in dem leistungselektronischen Bauelement 15 in Reihe geschaltet, um eine der drei Halbbrücken 7, 10, 12 zu bilden. Die Halbbrücken 7, 10, 12 sind hier jedoch untereinander nicht in dem leistungselektronischen Bauelement 15 verschaltet, sondern außerhalb.

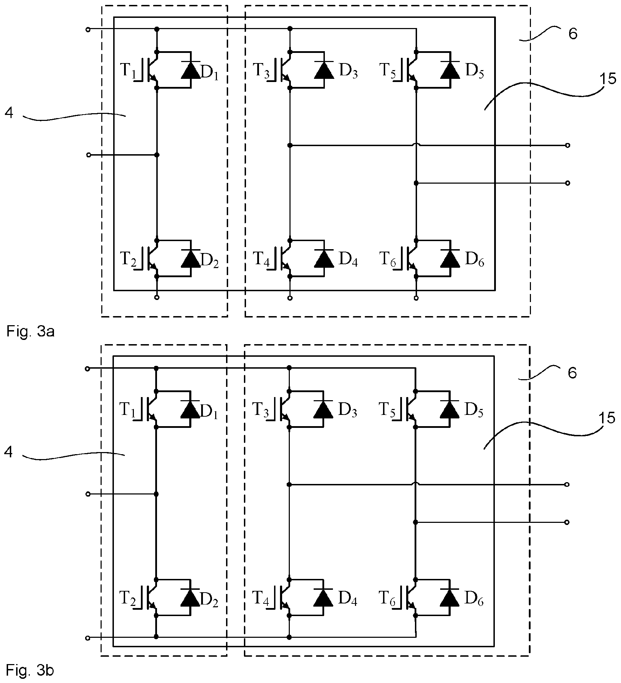

Figur 3a zeigt eine alternative Ausführungsvariante des leistungselektronischen Bauelements 15, bei dem die drei Halbbrücken 7, 10, 12 bereits seitens des Pluspols 17, d.h. die Kollektoranschlüsse der oberen Halbleiterschalter T1, T3, T5 in dem Bauelement 15 miteinander verbunden sind. Als leistungselektronisches Bauelement 15 kann hier beispielsweise eines der Leistungsmodule FS25R12W1T4 oder FS25R12W1T7P_B11 von der Firma Infineon, oder SK35GD12T4ET oder SKiiP 11AC126V10 der Firma SEMIKRON verwendet werden.

Figur 3b zeigt eine weitere alternative Ausführungsvariante des leistungselektronischen Bauelements 15, bei dem die drei Halbbrücken 7, 10, 12 seitens des Pluspols 17 und des Minuspols 18, d.h. die Kollektoranschlüsse der oberen Halbleiterschalter T1, T3, T5 einerseits und die Emitteranschlüsse der unteren Halbleiterschalter T2, T4, T6 andererseits bereits in dem Bauelement 15 miteinander verbunden sind. Als leistungselektronisches Bauelement 15 kann hier beispielsweise eines der Leistungsmodule FS3L25R12W2H3_B11 oder FS150R17N3E4_B11 von der Firma Infineon oder F1126PA025M7-L826F09, V23990-K238-F40, V23990-P708-F40-PM oder V23990-P829-F08x von der Firma Vincotech verwendet werden.

Figur 2a zeigt eine Ausführungsvariante des erfindungsgemäßen Frequenzumrichters 2, die dessen Betrieb an einem dreiphasigen Versorgungsnetz 1a ermöglicht. Hier ist ein dreiphasiges Netzfilter 28a vorgesetzt. In dieser Variante ist der Netzstromrichter 4a entsprechend der Anzahl der Phasen L1, L2, L3 des Versorgungsnetzes 1a dreiphasig. Er besteht folgemäßig aus drei identischen Halbbrücken 7, 7', 7". Jede dieser Halbbrücken 7, 7', 7" ist aus einem oberen und einem unteren Netzstromrichterzweig 7a, 7b gebildet und weist einen Eingangsknotenpunkt 8, 8', 8" aufweist, der jeweils den oberen und den unteren Netzstromrichterzweig 7a, 7b der jeweiligen Halbbrücke 7, 7', 7" miteinander verbindet und mit jeweils einer der Phasen L1, L2, L3 des dreiphasigen Versorgungsnetzes 1a verbunden ist. Der obere Netzstromrichterzweig 7a einer jeden Halbbrücke 7, 7', 7" verbindet den jeweiligen Eingangsknotenpunkt 8, 8', 8" über einen oberen steuerbaren Halbleiterschalter T1, T7, T9 der ersten Halbleiterschalter mit dem Pluspol 17 der Gleichspannung. Entsprechend verbindet der untere Netzstromrichterzweig 7b einer jeden Halbbrücke 7, 7', 7" den jeweiligen Eingangsknotenpunkt 8, 8', 8" über einen unteren steuerbaren Halbleiterschalter T2, T8, T10 der ersten Halbleiterschalter dem Minuspol 18 der Gleichspannung.

Das leistungselektronische Bauelement 15a hat hier folglich fünf identische Halbbrücken, mithin 10 Halbleiterschalter T1 ... T10 integriert, von denen zwei Halbbrücken 10, 12 den Maschinenumrichter 6 und die übrigen drei Halbbrücken 7, 7', 7" den Netzstromrichter 4a bilden.

Figur 2b zeigt eine Ausführungsvariante des erfindungsgemäßen Frequenzumrichters 2, die ebenfalls einen Betrieb an einem dreiphasigen Versorgungsnetz 1a ermöglicht. In dieser Variante ist der Netzstromrichter 4b allerdings zweiphasig. Er besteht aus einer ersten Halbbrücke 7 mit einem ersten Eingangsknotenpunkt 8 und einer zweiten Halbbrücke 7" mit einem zweiten Eingangsknotenpunkt 8". Das leistungselektronische Bauelement 15b hat hier folglich vier identische Halbbrücken, mithin 8 Halbleiterschalter T1 ... T8 integriert, von denen zwei Halbbrücken 10, 12 den Maschinenumrichter 6 und die übrigen zwei Halbbrücken 7, 7" den Netzstromrichter 4a bilden.

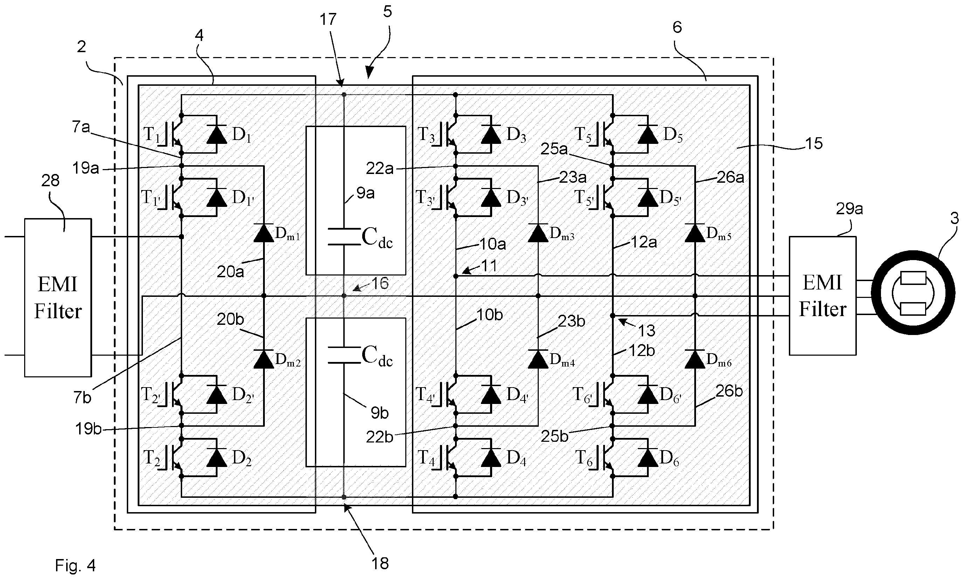

Der erste Eingangsknotenpunkt 8 ist mit einer ersten Phase L1 des Versorgungsnetzes 1a verbunden, und der zweite Eingangsknotenpunkt 8" ist mit einer zweiten Phase L3 des Versorgungsnetzes 1a verbunden. Darüber hinaus weist der Frequenzumrichter 2 hier einen dritten Eingangsknotenpunkt 8' auf, der einerseits mit dem Mittenpunkt 16 des Spannungszwischenkreises 5 verbunden ist und andererseits mit der dritten Phase L2 des Versorgungsnetzes 1a verbunden ist. In dieser Ausführungsvariante weisen somit der Maschinenstromrichter 6 und der Netzstromrichter 4b dieselbe Topologie auf. Dieser Frequenzumrichters 2 ist besonders kosten- und bauvolumeneffizient, weil er mit nur vier Halbbrücken 7, 7", 10, 12 einen konventionellen Vollumrichter mit sechs Halbbrücken ersetzen kann. In Figur 4 ist eine weitere Variante des erfindungsgemäßen Frequenzumrichters 2 mit einem einphasigen Netzstromrichter 4 gezeigt. Sie zeichnet sich dadurch aus, dass die Halbbrücken 7, 10, 12 in jedem Zweig 7a, 7b, 10a 10b, 12a, 12b nicht nur einen, sondern zwei in Reihe liegende, steuerbare Halbleiterschalter T1 ... T6, T1' ... T6' umfassen, zwischen denen jeweils ein Anschlusspunkt 19a, 19b, 22a, 22b, 25a, 25b liegt, von dem aus jeweils eine Brückenleitung 20a, 20b, 23a, 23b, 26a, 26b mit einer in Richtung des positiveren Potenzials gerichteten Mittelpunktdiode Dm1 ... Dm6 mit dem Mittenpunkt 16 verbunden ist. Dies ermöglicht es, im Maschinenstromrichter 6 das Potenzial des Mittenpunktes 16 auf den ersten oder zweiten Ausgangsanschluss 14a, 14b zu legen, indem die inneren, miteinander verbundenen Halbleiterschalter T3', T4' oder T5', T6' in den leitenden Zustand versetzt werden, während die äußeren, mit dem Plus- bzw. Minuspol 17, 18 verbundenen Halbleiterschalter T3, T4 bzw. T5, T6 sperren. Insgesamt können damit drei verschiedene Potenziale oder Spannungsebenen auf den ersten oder zweiten Ausgangsanschluss 14a, 14b geschaltet werden, so dass der Frequenzumrichter 2 hier eine 8-Schalter-3-Strang-3-Level Topologie aufweist. Der erfindungsgemäße Frequenzumrichter 2 muss also nicht unbedingt nur mit 2-Level-Halbbrücken umgesetzt werden. Er kann vielmehr auch mit mehrstufigen (Multilevel-) Halbbrücken realisiert sein.

Das leistungselektronische Bauelement 15 hat auch hier alle steuerbaren Halbleiterschalter T1 ... T6, T1 ` ... T6' des Netzstromrichters 4 und des Maschinenstromrichters 6 integriert, wobei die Halbbrücken 7, 10, 12 hier ebenfalls am Pluspol 17, am Minuspol 18 sowie am Mittenpunkt 16 im leistungselektronischen Bauelement 15 miteinander verschaltet sind.

Die in Figur 4 gezeigte Topologie des Frequenzumrichters 2 mit den zusätzlichen steuerbare Halbleiterschalter T1' ... T6 und den Mittelpunktdiode Dm1 ... Dm6 kann in entsprechender Weise auch bei den Varianten in Figuren 2a und 2b eingesetzt werden.

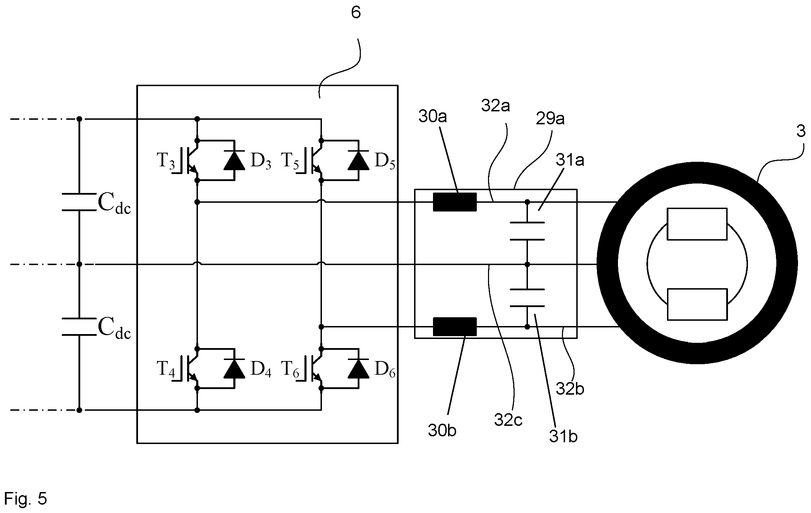

Figur 5 zeigt neben dem Frequenzumrichter 2 ein Ersatzschaltbild des zwischen diesem und der Drehfeldmaschine 3 angeordneten, erfindungsgemäßen Maschinenfilters 29a. Es besteht aus vier Filterelementen in Form von zwei Induktivitäten (Spulen) 30a, 30b und zwei Kapazitäten (Kondensatoren) 31a, 31b. Dabei ist jeweils eine der Induktivitäten 30a, 30b in der ersten und zweiten Zuleitung 32a, 32b angeordnet. Die zwei Kapazitäten 31a, 31b verbinden die erste und zweite Zuleitung 32a, 32b jeweils zwischen der Drehfeldmaschine 3 und der jeweiligen Induktivität 30a, 30b mit der dritten Zuleitung 32c. Das Filter 29a bildet somit einen Sinus- oder dU/dt-Filter zwischen dem Maschinenstromrichter 6 und der Drehfeldmaschine 3. Der Stand der Technik verwendet in dem Filter 29 gemäß Figur 1 demgegenüber in jeder der Phasen eine Spule, d.h. drei induktive Filterelemente, und drei kapazitive Filterelemente, die motorseitig in einer Stern- oder Dreieckschaltung verschaltet sind. Somit werden bei dem erfindungsgemäßen Filter 29a ein Drittel der Filterkomponenten eingespart.

Das Maschinenfilter 29a nach Figur 5 hat die Hauptaufgabe, die Steilheit der Spannungsflanken zwischen Maschinenstromrichter 6 und der angeschlossenen elektrischen Drehfeldmaschine 3 zu reduzieren. Hierdurch können die Verluste in der Drehfeldmaschine 3 verringert, die Isolationsbeanspruchung der Drehfeldmaschine 3 reduziert und das elektromagnetische Verhalten des Gesamtsystems verbessert werden. Die Filterelemente 30a, 30b, 31a, 31b sind so ausgelegt, dass eine modulationsbasierte Pulsmustergenerierung, beispielsweise eine Raumzeigermodulation, eine symmetrierte Sinusmodulation oder eine Flat-Top Modulation für den Betrieb des Maschinenstromrichters 6 verwendet werden kann und die Grundschwingungen der Ströme und Spannungen der Drehfeldmaschine 3 um mindestens eine Dekade von der Schaltfrequenz der Halbleiterschalter im Maschinenstromrichter 6 entfernt liegt. Die Filterelemente 30a, 30b, 31a, 31b sind also nicht zum Aufbau einer Resonanzstromrichter-Topologie ausgelegt. Ferner existiert keine galvanische Trennung zwischen dem Versorgungsnetz 1a und dem Maschinenstromrichter 6.

Der Aufbau des Maschinenfilters 29a kann auch bei dem Netzfilter 28b in Figur 2b verwendet werden, der zwischen dem Versorgungsnetz 1a und dem Frequenzumrichter 2 liegt. So kann das Netzfilter 28b aus zwei Induktivitäten und zwei Kapazitäten bestehen, wobei eine der Induktivitäten den ersten Eingangsknotenpunkt 8 mit der ersten Phase L1 und die andere Induktivität den zweiten Eingangsknotenpunkt 8" mit der zweiten Phase L3 des Versorgungsnetzes 1a verbindet, und eine der Kapazitäten den ersten Eingangsknotenpunkt 8 und eine zweite der Kapazitäten den zweiten Eingangsknotenpunkt 8" jeweils mit dem dritten Eingangsknotenpunkt 8' verbindet. Auf diese Weise wird gegenüber dem üblichen Aufbau eines dreiphasigen Netzfilters 28a sowohl eine Induktivität als auch eine Kapazität eingespart und das Netzfilter 28b besonders kompakt und kostengünstig. Die Funktion, der Aufbau und die Auslegung des Netzfilters 28b sind analog zum vorgeschlagenen Maschinenfilter 29a. Das Hauptziel des Netzfilters 28b ist es, Netzanschlussbedingungen hinsichtlich der Strom- und Spannungsharmonischen zu erfüllen.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls", "geeignet" oder dergleichen angegeben sind, sind als rein fakultativ zu betrachten und schränken ebenfalls den Schutzbereich nicht ein, welcher ausschließlich durch die Ansprüche festgelegt ist. Soweit in der vorstehenden Beschreibung Elemente, Komponenten, Verfahrensschritte, Werte oder Informationen genannt sind, die bekannte, naheliegende oder vorhersehbare Äquivalente besitzen, werden diese Äquivalente von der Erfindung mit umfasst. Ebenso schließt die Erfindung jegliche Änderungen, Abwandlungen oder Modifikationen von Ausführungsbeispielen ein, die den Austausch, die Hinzunahme, die Änderung oder das Weglassen von Elementen, Komponenten, Verfahrensschritte, Werten oder Informationen zum Gegenstand haben, solange der erfindungsgemäße Grundgedanke erhalten bleibt, ungeachtet dessen, ob die Änderung, Abwandlung oder Modifikationen zu einer Verbesserung oder Verschlechterung einer Ausführungsform führt.

Obgleich die vorstehende Erfindungsbeschreibung eine Vielzahl körperlicher, unkörperlicher oder verfahrensgegenständlicher Merkmale in Bezug zu einem oder mehreren konkreten Ausführungsbeispiel(en) nennt, so können diese Merkmale auch isoliert von dem konkreten Ausführungsbeispiel verwendet werden, jedenfalls soweit sie nicht das zwingende Vorhandensein weiterer Merkmale erfordern. Umgekehrt können diese in Bezug zu einem oder mehreren konkreten Ausführungsbeispiel(en) genannten Merkmale beliebig miteinander sowie mit weiteren offenbarten oder nicht offenbarten Merkmalen von gezeigten oder nicht gezeigten Ausführungsbeispielen kombiniert werden, jedenfalls soweit sich die Merkmale nicht gegenseitig ausschließen oder zu technischen Unvereinbarkeiten führen.

### Bezugszeichenliste

1 Versorgungsnetz einphasig
1a Versorgungsnetz dreiphasig
2 Frequenzumrichter
3 Drehfeldmaschine
4 Netzstromrichter einphasig
4a Netzstromrichter dreiphasig
4b Netzstromrichter zweiphasig
5 Spannungszwischenkreis
6 Maschinenstromrichter
7, 7', 7" Halbbrücke des Netzstromrichters
7a oberer Netzstromrichterzweig
7b unterer Netzstromrichterzweig8, 8', 8" Eingangsknotenpunkt
9a oberer Zwischenkreiszweig
9b unterer Zwischenkreiszweig
10 Erste Halbbrücke des Maschinenstromrichters
10a oberer Maschinenstromrichterzweig der ersten Halbbrücke
10b unterer Maschinenstromrichterzweig der ersten Halbbrücke
11 Erster Ausgangsknotenpunkt
12 zweite Halbbrücke des Maschinenstromrichters
12a oberer Maschinenstromrichterzweig der zweiten Halbbrücke
12b unterer Maschinenstromrichterzweig der zweiten Halbbrücke
13 zweiter Ausgangsknotenpunkt
14a erster Ausgangsanschluss
14b dritter Ausgangsanschluss
14c zweiter Ausgangsanschluss15, 15a, 15b konzentriertes leistungselektronisches Bauteil
16 Mittenpunkt
17 Erster Pol, Pluspol
18 Zweiter Pol, Minuspol
19a, 19b oberer und unterer Anschlusspunkt der Halbbrücke des Netzstromrichters
20a, 20b obere und untere Brückenleitung der Halbbrücke des Netzstromrichters
22a, 22b oberer und unterer Anschlusspunkt der ersten Halbbrücke des Maschinenstromrichters
23a, 23b obere und untere Brückenleitung der ersten Halbbrücke des Maschinenstromrichters
25a, 25b oberer und unterer Anschlusspunkt der zweiten Halbbrücke des Maschinenstromrichters
26a, 26b obere und untere Brückenleitung der zweiten Halbbrücke des Maschinenstromrichters
28, 28a, 28b Netzfilter
29, 29a Maschinenfilter
30a, 30b Induktivität
31a, 31b Kapazität
32a erste Zuleitung
32b zweite Zuleitung
32c dritte Zuleitung
T1 .... T10, T1' .... T6' steuerbare Halbleiterschalter
D1 ... D10, D1' .... D6' Freilaufdioden
Dm1 ... Dm6 Mittelpunktdioden
C_{dc} ... Zwischenkreiskapazität

## Patentansprüche

1. Frequenzumrichter (2) zur Versorgung einer Drehfeldmaschine (3) oder eines Transformators mit einer Versorgungsspannung variabler Frequenz und Amplitude, umfassend einen Netzstromrichter (4, 4a, 4b) mit ersten Halbleiterschaltern (T1, T2, T1', T2', T7 ... T10) zur Umwandlung einer ein- oder mehrphasigen Wechselspannung eines Versorgungsnetzes (1, 1a) in eine Gleichspannung, einen Maschinenstromrichter (6) mit steuerbaren zweiten Halbleiterschaltern (T3, T3', T4, T4', T5, T5', T6, T6`) zur Umwandlung der Gleichspannung in die Versorgungsspannung, und einen zwischen dem Netzstromrichter (4, 4a, 4b) und dem Maschinenstromrichter (6) angeordneten, die Gleichspannung tragenden Spannungszwischenkreis (5), der aus einem oberen und einem unteren Zwischenkreiszweig (9a, 9b) gebildet ist, die an einem gemeinsamen Mittenpunkt (16) miteinander verbunden sind, wobei der obere Zwischenkreiszweig (9a) den Mittenpunkt (16) über zumindest einen oberen Kondensator (C_{dc}) mit einem ersten Pol (17) des Spannungszwischenkreises (5) verbindet und der untere Zwischenkreiszweig (9b) den Mittenpunkt (16) über zumindest einen unteren Kondensator (C_{dc}) mit einem zweiten Pol (18) des Spannungszwischenkreises (5) verbindet, **dadurch gekennzeichnet, dass** der Maschinenstromrichter (6) nur aus zwei identischen, die zweiten Halbleiterschalter (T3, T3', T4, T4', T5, T5', T6, T6`) enthaltenden Halbbrücken (10, 12) besteht, um an einem ersten Ausgangsanschluss (14a) eine erste Phase der Versorgungsspannung und an einem zweiten Ausgangsanschluss (14b) eine zweite Phase der Versorgungsspannung bereitzustellen, wobei der Maschinenstromrichter (6) eingerichtet ist, an einem dritten Ausgangsanschluss (14c) den Mittenpunkt (16) des Spannungszwischenkreises (5) bereitzustellen, und der Netzstromrichter (4, 4a, 4b ) aus einer Anzahl an Halbbrücken (7, 7', 7") besteht, die identisch zu den Halbbrücken (10, 12) des Maschinenstromrichters (6) aufgebaut sind und die ersten Halbleiterschalter (T1, T2, T1', T2', T7 ... T10) enthalten, und wobei die ersten und zweiten Halbleiterschalter (T1 ... T6, T1' ... T6', T7 ... T10) physisch in einem einzigen konzentrierten, leistungselektronischen Bauelement (15, 15a, 15b) integriert sind.

2. Frequenzumrichter (2) nach Anspruch 1, **dadurch gekennzeichnet, dass** in dem leistungselektronischen Bauelement (15, 15a, 15b) genau drei, vier oder fünf identische, voneinander unabhängige Halbbrücken (7, 7', 7", 10, 12) integriert sind, wobei innerhalb des Bauelements (15, 15a, 15b) die ersten Halbleiterschalter (T1, T2, T1', T2', T7 ... T10) zu der oder den für den Netzstromrichters (4, 4a, 4b) verwendeten Halbbrücke(n) (7, 7', 7") und die zweiten Halbleiterschalter (T3, T3', T4, T4', T5, T5', T6, T6`) zu den für den Maschinenstromrichter (6) verwendeten Halbbrücken (10, 12) verschaltet sind.

3. Frequenzumrichter (2) nach Anspruch 1 oder 2, **dadurch gekennzeichnet, dass** der Netzstromrichter (4) aus einer Halbbrücke (7) besteht, die aus einem oberen und einem unteren Netzstromrichterzweig (7a, 7b) gebildet ist und einen ersten Eingangsknotenpunkt (8) aufweist, der den oberen und den unteren Netzstromrichterzweig (7a, 7b) miteinander verbindet und zur Verbindung mit einem ersten Leiter eines einphasigen Versorgungsnetzes (1) vorgesehen ist, wobei der obere Netzstromrichterzweig (7a) den Eingangsknotenpunkt (8) über zumindest einen oberen steuerbaren Halbleiterschalter (T1, T1') der ersten Halbleiterschalter (T1, T2, T1', T2', T7 ... T10) mit dem ersten Pol (17) der Gleichspannung verbindet und der untere Netzstromrichterzweig (7b) den Eingangsknotenpunkt (8) über zumindest einen unteren steuerbaren Halbleiterschalter (T2, T2`) der ersten Halbleiterschalter (T1, T2, T1', T2', T7 ... T10) mit dem zweiten Pol (18) der Gleichspannung verbindet.

4. Frequenzumrichter (2) nach Anspruch 1 oder 2, **dadurch gekennzeichnet, dass** der Netzstromrichter (4a, 4b) aus zwei oder drei Halbbrücken (7, 7', 7") besteht, und jede dieser Halbbrücken (7, 7', 7") aus einem oberen und einem unteren Netzstromrichterzweig (7a, 7b) gebildet ist und einen Eingangsknotenpunkt (8, 8', 8") aufweist, der den oberen und den unteren Netzstromrichterzweig (7a, 7b) der jeweiligen Halbbrücke (7, 7', 7") miteinander verbindet und zur Verbindung mit jeweils einer der Phasen (L1, L2, L3) eines dreiphasigen Versorgungsnetzes (1a) vorgesehen ist, wobei der obere Netzstromrichterzweig (7a) einer jeden Halbbrücke (7, 7', 7") den jeweiligen Eingangsknotenpunkt (8, 8', 8") über zumindest einen oberen steuerbaren Halbleiterschalter (T1, T7, T9) der ersten Halbleiterschalter (T1, T2, T1', T2', T7 ... T10) mit dem ersten Pol (17) der Gleichspannung verbindet und der untere Netzstromrichterzweig (7b) einer jeden Halbbrücke (7, 7', 7") den jeweiligen Eingangsknotenpunkt (8, 8', 8") über zumindest einen unteren steuerbaren Halbleiterschalter (T2, T8, T10) der ersten Halbleiterschalter (T1, T2, T1', T2', T7 ... T10) mit dem zweiten Pol (18) der Gleichspannung verbindet.

5. Frequenzumrichter (2) nach Anspruch 4, **dadurch gekennzeichnet, dass** der Netzstromrichter (4b) aus einer ersten Halbbrücke (7) mit einem ersten Eingangsknotenpunkt (8) und einer zweiten Halbbrücke (7") mit einem zweiten Eingangsknotenpunkt (8") besteht, wobei der erste Eingangsknotenpunkt (8) zur Verbindung mit einer ersten Phase (L1) des dreiphasigen Versorgungsnetzes (1a) und der zweite Eingangsknotenpunkt (8") zur Verbindung mit einer zweiten Phase (L3) des dreiphasigen Versorgungsnetzes (1a) vorgesehen ist, und dass der Netzstromrichter (4b) eingerichtet ist, einen dritten Eingangsknotenpunkt (8') bereitzustellen, der mit dem Mittenpunkt (16) des Spannungszwischenkreises (5) verbunden ist und zur Verbindung mit einer dritten Phase (L2) des dreiphasigen Versorgungsnetzes (1a) vorgesehen ist.

6. Frequenzumrichter (2) nach Anspruch 3, **dadurch gekennzeichnet, dass** der Mittenpunkt (16) des Spannungszwischenkreises (5) einen zweiten Eingangsknotenpunkt bildet und zur Verbindung mit dem zweiten Leiter des einphasigen Versorgungsnetzes (1), insbesondere dem Nullleiter (N) vorgesehen ist.

7. Frequenzumrichter (2) nach einem der vorherigen Ansprüche, **dadurch gekennzeichnet, dass** jede der Halbbrücken (10, 12) des Maschinenstromrichters (6) aus einem oberen und einem unteren Maschinenstromrichterzweig (10a, 10b, 12a, 12b) gebildet ist, wobei der obere und der untere Maschinenstromrichterzweig (10a, 10b) einer ersten Halbbrücke (10) der beiden Halbbrücken (10, 12) an einem gemeinsamen ersten Ausgangsknotenpunkt (11) miteinander und mit dem ersten Ausgangsanschluss (14a) verbunden sind, und der obere und der untere Maschinenstromrichterzweig (12a, 12b) einer zweiten Halbbrücke (12) der beiden Halbbrücken (10, 12) an einem gemeinsamen zweiten Ausgangsknotenpunkt (13) miteinander und mit dem zweiten Ausgangsanschluss (14b) verbunden sind, wobei der obere Maschinenstromrichterzweig (10a) der ersten Halbbrücke (10) und der obere Maschinenstromrichterzweig (12a) der zweiten Halbbrücke (12) den jeweiligen Ausgangsknotenpunkt (11, 13) über zumindest einen oberen steuerbaren Halbleiterschalter (T3, T3`, T5, T5`) der zweiten Halbleiterschalter (T3, T3', T4, T4', T5, T5', T6, T6`) mit dem ersten Pol (17) der Gleichspannung verbindet und der untere Maschinenstromrichterzweig (10b) der ersten Halbbrücke (10) und der untere Maschinenstromrichterzweig (12b) der zweiten Halbbrücke (12) den jeweiligen Ausgangsknotenpunkt (11, 13) über zumindest einen unteren steuerbaren Halbleiterschalter (T4, T4`, T6, T6`) der zweiten Halbleiterschalter (T3, T3', T4, T4', T5, T5', T6, T6`) mit dem zweiten Pol (18) der Gleichspannung verbindet.

8. Frequenzumrichter (2) nach einem der vorherigen Ansprüche, **dadurch gekennzeichnet, dass** die Halbbrücken (7, 10, 12) in jedem Zweig (7a, 7b, 10a 10b, 12a, 12b) zwei in Reihe liegende, steuerbare Halbleiterschalter (T1 ... T6, T1' ... T6`) umfassen, zwischen denen jeweils ein Anschlusspunkt (19a, 19b, 22a, 22b, 25a, 25b) liegt, von dem aus jeweils eine Brückenleitung (20a, 20b, 23a, 23b, 26a, 26b) mit einer in Richtung des positiveren Potenzials gerichteten Diode (Dm1 ... Dm6) mit dem Mittenpunkt (16) verbunden ist.

9. Anordnung aus einem Frequenzumrichter (2) nach einem der vorherigen Ansprüche und einer Drehfeldmaschine (3) oder einem Transformator, wobei die Drehfeldmaschine (3) oder der Transformator von dem Frequenzumrichter im Betrieb gespeist wird, und über eine erste Zuleitung (32a) mit dem ersten Ausgangsanschluss (14a), über eine zweite Zuleitung (32b) mit dem zweiten Ausgangsanschluss (14b) und über eine dritte Zuleitung (32c) mit dem dritten Ausgangsanschluss (14c) verbunden ist.

10. Anordnung nach Anspruch 9, **dadurch gekennzeichnet, dass** zwischen dem Frequenzumrichter (2) und der Drehfeldmaschine (3) oder dem Transformator ein Maschinenfilter (29a) angeordnet ist, das aus zwei Induktivitäten (30a, 30b) und zwei oder drei Kapazitäten (31a, 31b) besteht, wobei eine der Induktivitäten (30a) in der ersten Zuleitung (32a) und die andere Induktivität (30b) in der zweiten Zuleitung (32b) angeordnet ist, und eine der Kapazitäten (31a) die erste Zuleitung (31a) und eine zweite der Kapazitäten (31b) die zweite Zuleitung (32b) jeweils zwischen der Drehfeldmaschine (3) oder dem Transformator und der jeweiligen Induktivität (30a, 30b) mit einem Potenzial des Spannungszwischenkreises (5) verbinden.

11. Anordnung nach Anspruch 10, **dadurch gekennzeichnet, dass** das Maschinenfilter (29a) aus zwei Induktivitäten (30a, 30b) und nur zwei Kapazitäten (31a, 31b) besteht, wobei die Kapazitäten (31a, 31b) jeweils eine der ersten und zweiten Zuleitung (32a, 32b) mit der dritten Zuleitung (32c) verbinden.

12. Anordnung nach Anspruch 9, 10 oder 11 mit einem Frequenzumrichter (2) gemäß Anspruch 5, **dadurch gekennzeichnet, dass** zwischen dem Frequenzumrichter (2) und dem Versorgungsnetz (1a) ein Netzfilter (28b) angeordnet ist, das aus zwei Induktivitäten und zwei oder drei Kapazitäten besteht, wobei eine der Induktivitäten den ersten Eingangsknotenpunkt (8) mit der ersten Phase (L1) und die andere Induktivität den zweiten Eingangsknotenpunkt (8") mit der zweiten Phase (L3) des Versorgungsnetzes (1a) verbindet, und eine der Kapazitäten den ersten Eingangsknotenpunkt (8) und eine zweite der Kapazitäten den zweiten Eingangsknotenpunkt (8") mit einem Potenzial des Spannungszwischenkreises (5), insbesondere im Falle von nur zwei Kapazitäten mit dem dritten Eingangsknotenpunkt (8') verbindet.

13. Anordnung nach einem der Ansprüche 9 bis 12, **dadurch gekennzeichnet, dass** die Drehfeldmaschine (3) ein Pumpenmotor einer Kreiselpumpe ist.
